# EUROPÄISCHE PATENTSCHRIFT

(11) **EP 1 541 278 B1**
(45) Veröffentlichungstag und Bekanntmachung des Hinweises auf die Patenterteilung: **06.09.2006**
(21) Anmeldenummer: 04106424.7
(22) Anmeldetag: 09.12.2004
(51) Int. Cl.: B23Q 11/00, B04C 5/187

(54) **Zyklonabscheider**
Cyclone separator
Séparateur hydrocyclone

(30) Priorität: 11.12.2003 DE 10358030
(43) Veröffentlichungstag der Anmeldung: 15.06.2005
(73) Patentinhaber: HILTI Aktiengesellschaft, 9494 Schaan (LI)
(72) Erfinder: Michele, Volker, 51065 Köln (DE); Herold, Heiko, 41470 Neuss (DE); Sanchen, Günther, 9472 Grabs (CH)
(74) Vertreter: Wildi, Roland

(56) Entgegenhaltungen:
- DE-A1- 10 230 590
- DE-A1- 19 827 173

## Beschreibung

Die Erfindung betrifft einen Zyklonabscheider zur Verwendung in einer Absaugvorrichtung eines Handwerkzeuggerätes, wie insbesondere eines motorisch betriebenen Bohr- oder Meisselgerätes oder einer Säge. Der Zyklonabscheider weist einen Schmutzlufteintritt auf, zur Einleitung von Absaugluft, die mittels eines Sauggebläses über eine Saugöffnung eingesaugt wird und mit Abriebspartikeln versetzt ist, die im Betrieb des Handwerkzeuggerätes anfallen. Ferner ist ein Reinluftaustritt vorhanden, zum Ablass von gereinigter Luft. Zwischen Schmutzlufteintritt und Reinluftaustritt ist ein Wirbelraum angeordnet, in den der Schmutzlufteintritt im Wesentlichen tangential einmündet. Dabei wird der Wirbelstrom um eine mit dem Reinluftaustritt in Verbindung stehende Reinluftentnahme herum erzeugt. Zudem ist der Wirbelraum über einen Partikelaustritt zu einem Auffangraum hin geöffnet.

Derartige Zyklonabscheider sind bekannt, um im Betrieb eines Handwerkzeuggerätes anfallende Abriebspartikel, wie beispielsweise Bohrklein, Staubpartikel, Sägespäne usw., sammein und entsorgen zu können. Dabei ermöglicht der Zyklonabscheider einen gänzlichen Verzicht auf Filterelemente bzw. eine ledigliche Verwendung von Filterelementen für Feinststäube. Auf diese Weise ist es möglich das Handwerkzeuggerät sehr lange zu betreiben ohne das Filterelement austauschen zu müssen. Die Entleerung des Auffangraumes ist dabei lediglich in sehr langen Zeitabständen erforderlich, da er in der Regel relativ grossvolumig ausgeformt ist.

Aus der DE 198 27 173 ist ein Zyklonabscheider für eine Handwerkzeugmaschine bekannt. Dieser weist ein Tauchrohr auf, das in eine zylindrische Kammer ragt, in der ein Wirbel erzeugt wird. Durch den Wirbel werden die angesaugten Abriebpartikel gegen die zylindrische Innenwand der Kammer gedrückt und wandern infolge der Schwerkraft über eine offene Stirnseite der Kammer in einen Auffangbehälter.

Nachteilig an dem bekannten Zyklonabscheider ist, dass er nur bei einer bestimmten Ausrichtung im Raum zufrieden stellend arbeitet. Sobald die offene Stirnseite der Kammer bezogen auf die Schwerkraft über der Öffnung des Tauchrohres liegen, werden die Abriebpartikel nicht mehr zum Auffangbehälter transportiert sondern grösstenteils über das Tauchrohr zum Reinluftaustritt geleitet. Somit kann der Abscheidegrad des Zyklonabscheiders bei einigen Anwendungen des Handwerkzeuggerätes, beispielsweise bei Überkopf- oder Bodenarbeiten nahezu gegen Null gehen.

Der vorliegenden Erfindung liegt die Aufgabe zugrunde, bei einem Zyklonabscheider die genannten Nachteile zu vermeiden und unabhängig von dessen Ausrichtung im Raum eine ausreichende Abscheidewirkung zu erzielen.

Erfindungsgemäss wird die Aufgabe dadurch gelöst, dass der Partikelaustritt wenigstens zwei Partikelaustrittsöffnungen aufweist, zwischen denen der Schmutzlufteintritt in den Wirbelraum mündet. Hierdurch können die Abriebpartikel in mehr als eine Richtung der Schwerkraft folgend aus dem Wirbelraum austreten. Auf diese Weise kann für alle möglichen Ausrichtungen des Zyklonabscheiders gegenüber der Schwerkraft eine ausreichende Abscheidewirkung gewährleistet werden.

In einer besonders bevorzugten Ausführungsform ist der Wirbelraum zylindrisch ausgeformt und weist an seinen zwei Stirnseiten jeweils eine der Partikelaustrittsöffnungen auf. Somit sind die Partikelaustrittsöffnungen bezüglich der Einmündung des Schmutzlufteintrittes an genau gegenüberliegenden Seiten des Wirbelzylinders angeordnet. Auf diese Weise wird sichergestellt, dass immer eine der Partikelaustrittsöffnungen zumindest auf gleicher Höhe mit der Einmündung des Schmutzlufteintrittes liegt. Die zylindrische Form des Wirbelraumes ermöglicht dabei die Ausbildung eines stabilen Potentialwirbels, durch den nahezu alle Abriebspartikel die schwerer als Luft sind, dicht an der Innenwand des Wirbelraumes entlang bewegt werden.

Vorteilhafterweise ragt an den Partikelaustrittsöffnungen jeweils ein Tauchrohr in den Wirbelraum, das die Reinluftentnahme bildet und mit dem Reinluftaustritt verbunden ist. Durch diese Bauweise kann an beiden Partikelaustrittsöffnungen eine ausreichende Trennung der durch die Wirbelströmung an die Innenwand des Wirbelraumes gedrückten Abriebpartikel gewährleistet werden.

Bevorzugterweise sind die Tauchrohre mit einer gemeinsamen Reinluftaustrittsöffnung des Reinluftaustrittes verbunden. Hierdurch ist es möglich durch ein einziges, dem Zyklonabscheider nachgeschaltetes Sauggebläse die benötigte Saugströmung vom Schmutzlufteintritt bis zum Reinluftaustritt zu erzeugen. Die nachgeschaltete Anordnung hat dabei den Vorteil, dass das Sauggebläse von der bereits gereinigten Luft passiert wird und an diesem die Gefahr von Beschädigungen und Verschleiss verringert wird.

Vorteilhafterweise ist zwischen den Tauchrohren und dem Reinluftaustritt wenigstens ein Filterelement angeordnet, wodurch die Reinigungswirkung insgesamt erhöht werden kann.

Ferner ist das Filterelement vorteilhafterweise zwischen einem Vereinigungsabschnitt der Tauchrohre und der Reinluftaustrittsöffnung angeordnet, wodurch die gesamte anfallende Reinluft mit einem einzelnen Filterelement gereinigt werden kann.

Die Erfindung wird nachstehend anhand eines Ausführungsbeispieles näher erläutert. Es zeigen:
- Fig. 1: eine Ansicht eines Handwerkzeuges mit einem zum Teil längsgeschnitten dargestellten erfindungsgemässen Zyklonabscheider,
- Fig. 2: einen Querschnitt in der Ebene II-II durch den Zyklonabscheider nach Fig. 1 und
- Fig. 3: eine Darstellung einer alternativen Ausführungsform des erfindungsgemässen Zyklonabscheiders.

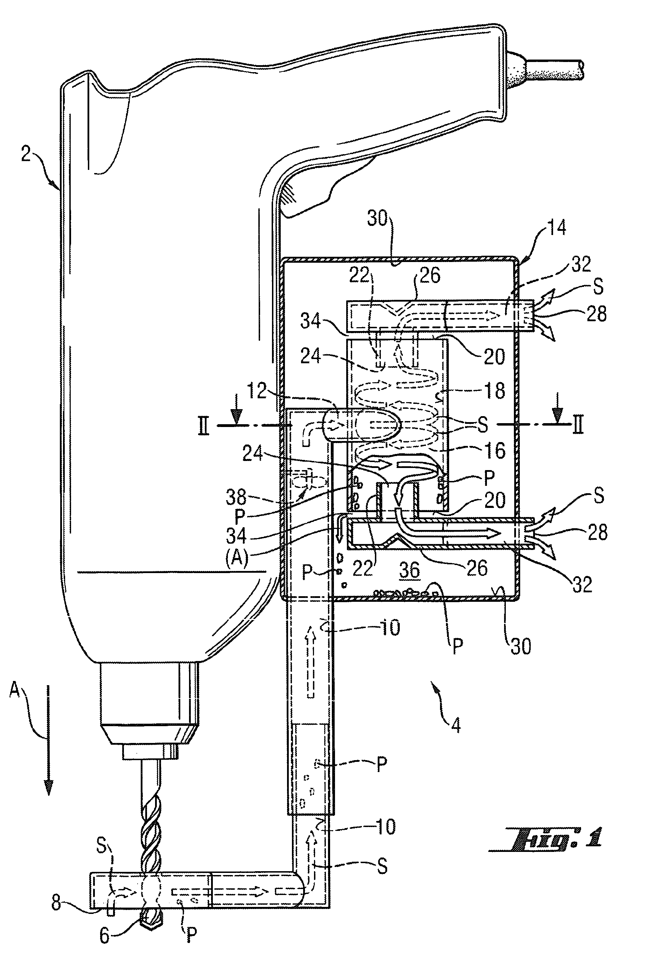

Fig. 1 zeigt ein Handwerkzeuggerät 2 in Form eines Bohr- oder Meisselgerätes, an dem eine insgesamt mit 4 bezeichnete Absaugvorrichtung lösbar oder dauerhaft befestigt ist. An einem Werkzeug 6, in Form eines Bohrers, des Handwerkzeuggerätes 2 weist die Absaugvorrichtung 4 eine Saugöffnung 8 auf. Diese Saugöffnung 8 ist über eine Saugleitung 10 mit einem Schmutzlufteintritt 12 eines insgesamt mit 14 bezeichneten Zyklonabscheiders verbunden.

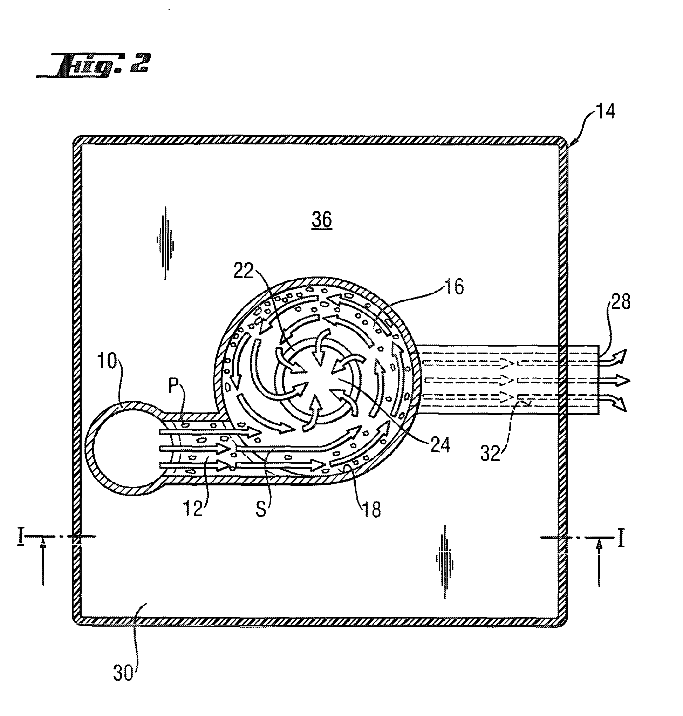

Der Zyklonabscheider 14 weist einen zylinderförmigen Wirbelraum 16 auf, in den der Schmutzlufteintritt 12 im Wesentlichen tangential zu einer Innenwand 18 des Wirbelraumes 16 einmündet, wie insbesondere aus Fig. 2 zu entnehmen ist.

Wie in Fig. 1 weiter dargestellt weist der Wirbelraum 16 zwei offene Stirnseiten 20 auf. An beiden Stirnseiten 20 ragt jeweils ein Tauchrohr 22 in den Wirbelraum 16 hinein. Beide Tauchrohre 22 bilden an ihrem in den Wirbelraum 16 ragenden offenen Ende eine Reinluftentnahme 24, die mittig im Wirbelraum 16 angeordnet ist. Beide Tauchrohre 22 sind von je einem Abdeckelement 26 gehalten, über das sie mit jeweils einer Reinluftaustrittsöffnung 28 verbunden sind. Beide Reinluftaustrittsöffnungen 28 werden hierbei insgesamt als Reinluftaustritt bezeichnet.

Der Reinluftaustritt liegt ausserhalb eines Aufnahmebehälters 30, der dargestellt ist. Innerhalb des Aufnahmebehälters 30 ist die gesamte Anordnung aus Schmutzlufteintritt 12, Wirbelraum 16, Tauchrohre 22 und Abdeckelemente 26 untergebracht. Die Abdeckelemente 26 sind dabei jeweils über eine Austrittsleitung 32 mit der jeweiligen Reinluftaustrittsöffnung 28 verbunden. Beide Austrittsleitungen 32 durchdringen hierzu eine Wand des Aufnahmebehälters 30.

Die Abdeckelemente 26 weisen in etwa den gleichen Umfang auf wie der Wirbelraum 16. Ferner sind die Abdeckelemente 26 koaxial zu demselben mit einem kleinen Abstand zu den Stirnseiten 20 gehalten. Hierdurch werden zwischen dem Wirbelraum 16 und den Abdeckelementen 26 Partikelaustrittsöffnungen 34 in Form von Ringspalten gebildet, die den Wirbelraum 16 mit einem durch den Aufnahmebehälter 30 begrenzten Auffangraum 36 verbinden.

Um einen durch eine Pfeilfolge dargestellten Saugluftstrom S von der Saugöffnung 8 über den Zyklonabscheider 14 zu dessen Reinluftaustrittsöffnungen 28 zu erzeugen, ist bei der Ausführungsform nach Fig. 1 ein Sauggebläse 38 in der Saugleitung 10 vorgesehen.

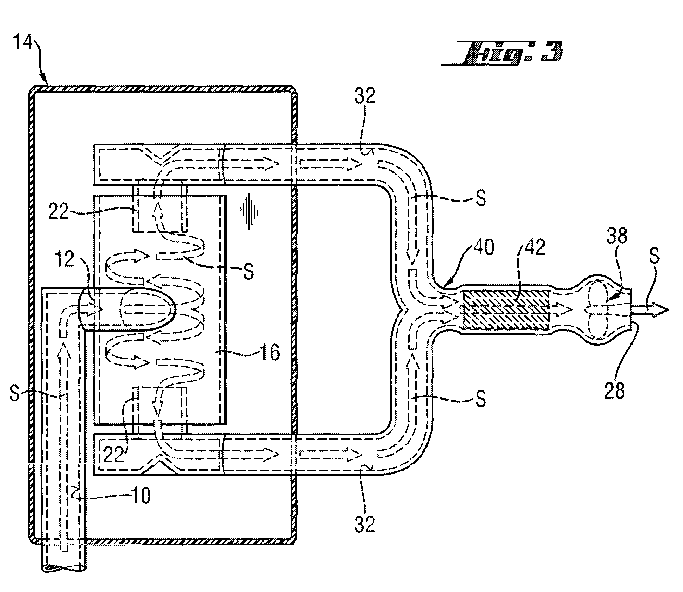

Alternativ hierzu ist es auch möglich, das Sauggebläse 38 dem Wirbelraum 16 nachzuschalten, wie in Fig. 3 dargestellt. Hierbei werden bei dieser Ausführungsform die beiden Austrittsleitungen 32 in einem Vereinigungsabschnitt 40 zusammengeleitet, um mittels dem einzigen Sauggebläse 38 über beide Austrittsleitungen 32 den Saug-Luftstrom S erzeugen zu können. Zusätzlich ist hier zwischen dem Vereinigungsabschnitt 40 und der Reinluftaustrittsöffnung 28 ein gestrichelt dargestelltes Filterelement 42 untergebracht.

Zum Betrieb des Zyklonabscheiders 14 wird das Sauggebläse 38 aktiviert. Dieses erzeugt den Saugluftstrom S, der Abriebpartikel P, die durch das Werkzeug 6 abgebaut werden, über die Saugöffnung 8 einsaugt und zum Schmutzlufteintritt 12 transportiert. Über diesen wird der mit Abriebpartikeln P versetzte Saugluftstrom S tangential in den Wirbelraum 16 eingeleitet. Dabei bildet der Saugluftstrom S im Wirbelraum 16 eine Art Potentialwirbel, wie insbesondere aus Fig. 2 zu entnehmen ist. In diesem werden die Abriebpartikel P aufgrund ihrer Trägheit an die Innenwand 18 gedrückt und an dieser entlang bewegt. Durch den gleichzeitigen Einfluss der Schwerkraft bewegen sich die Abriebpartikel P auf einer etwa Schraubenförmigen Bahn in Richtung der jeweils in Schwerkraftrichtung unteren Stirnseite 20 des Wirbelraumes 16. An der jeweiligen Partikelaustrittsöffnung 34 fallen die Abriebpartikel P dann, wie in Fig. 1 dargestellt, aus dem Wirbelraum 16 heraus und sammeln sich in dem Auffangraum 36. Gleichzeitig gelangt die auf diese Weise weitestgehend von den Abriebpartikeln P getrennte Luft des Saugluftstroms S, die sich beim Eintritt in den Wirbelraum 16 zu beiden Stirnseiten 20 schraubenförmig hin bewegt, über die Reinluftentnahmen 24 in die Tauchrohre 22.

In Fig. 1 ist das Handwerkzeuggerät 2 für den Fall einer Bodenanwendung dargestellt, bei der eine Arbeitsrichtung A des Handwerkzeuggerätes 2 entsprechend der Richtung der Schwerkraft nach unten zeigt. Dementsprechend treten die Abriebpartikel P hier in Arbeitsrichtung A aus dem Wirbelraum 16 aus. Alternativ hierzu würden sich die Abriebpartikel P beispielsweise bei einer Deckenanwendung zu der Partikelaustrittsöffnung 34 bewegen, die an der von der Arbeitsrichtung A abgewandten Seite des Wirbelraumes 16 liegt. Um den Auffangraum 36 von Zeit zu Zeit leeren zu können, ist der Aufnahmebehälter 30 mit einer nicht dargestellten Öffnungseinrichtung versehen.

In den Tauchrohren 22 angekommen wird der von den Abriebpartikeln P zumindest weitestgehend befreite Saugluftstrom S über die Austrittsleitungen 32, wie in Fig. 1 dargestellt, direkt zu den Reinluftaustrittsöffnungen 28 geleitet und dort an die Aussenluft abgegeben. Alternativ hierzu wird der Saugluftstrom S, wie in Fig. 3 dargestellt vor dem Austritt aus der einzigen Reinluftaustrittsöffnung 28 noch durch das Filterelement 42 zusätzlich von Kleinstpartikeln und Staub gereinigt.

## Patentansprüche

1. Zyklonabscheider (14) zur Verwendung in einer Absaugvorrichtung (4) eines Handwerkzeuggerätes (2), wie insbesondere eines motorisch betriebenen Bohr- oder Meisselgerätes, mit einem Schmutzlufteintritt (12), zur Einleitung von Absaugluft, die mittels eines Sauggebläses (38) über eine Saugöffnung (8) eingesaugt wird und mit im Betrieb des Handwerkzeuggerätes (2) anfallenden Abriebspartikeln (P) versetzt ist, und einem Reinluftaustritt, zum Ablass von gereinigter Luft, sowie einem dazwischen geschalteten Wirbelraum (16), in den der Schmutzlufteintritt (12), zur Erzeugung eines Wirbelstromes um eine mit dem Reinluftaustritt in Verbindung stehende Reinluftentnahme (24), im wesentlichen tangential einmündet und der über einen Partikelaustritt zu einem Auffangraum (36) hin geöffnet ist, **dadurch gekennzeichnet, dass** der Partikelaustritt wenigstens zwei Partikelaustrittsöffnungen (34) aufweist, zwischen denen der Schmutzlufteintritt (12) in den Wirbelraum (16) mündet.

2. Zyklonabscheider nach Anspruch 1, **dadurch gekennzeichnet, dass** der Wirbelraum (16) zylindrisch ist und an zwei Stirnseiten (20) jeweils eine der Partikelaustrittsöffnungen (34) aufweist.

3. Zyklonabscheider nach Anspruch 1 oder 2, **dadurch gekennzeichnet, dass** der Schmutzlufteintritt (12) mittig zwischen den Partikelaustrittsöffnungen (34) in den Wirbelraum (16) einmündet.

4. Zyklonabscheider nach einem der Ansprüche 1 bis 3, **dadurch gekennzeichnet, dass** an den Partikelaustrittsöffnungen (34) jeweils ein Tauchrohr (22) in den Wirbelraum (16) ragt, das die Reinluftentnahme (24) bildet und mit dem Reinluftaustritt verbunden ist.

5. Zyklonabscheider nach Anspruch 5, **dadurch gekennzeichnet, dass** die Tauchrohre (22) mit einer gemeinsamen Reinluftaustrittsöffnung (28) des Reinluftaustrittes verbunden sind.

6. Zyklonabscheider nach Anspruch 4 oder 5, **dadurch gekennzeichnet, dass** zwischen den Tauchrohren (22) und dem Reinluftaustritt wenigstens ein Filterelement (42) angeordnet ist.

7. Zyklonabscheider nach Anspruch 6, **dadurch gekennzeichnet, dass** das Filterelement (42) zwischen einem Vereinigungsabschnitt (40) der Tauchrohre (22) und der Reinluftaustrittsöffnung (28) angeordnet ist.

## Claims

1. Cyclone separator (14) for use in a suction device (4) of a hand tool (2), such as a motor operated boring or drilling device in particular, with a dirty air inlet (12) for introducing suction air, which is drawn in by means of a suction fan (38) through a suction opening (8) and mixed with particles (P) from abrasion occurring during operation of the hand tool (2), and a clean air outlet to draw off clean air, as well as an eddy area (16) connected therebetween, into which the dirty air inlet (12) for producing an eddy current around a clean air intake (24) connected to the clean air outlet basically discharges tangentially and which opens through a particle outlet to a collection area (36), **characterised in that** the particle outlet has at least two particle outlet openings (34), between which the dirty air inlet (12) opens out into the eddy area (16).

2. Cyclone separator according to claim 1, **characterised in that** the eddy area (16) is cylindrical and has a particle outlet opening (34) at both ends (20).

3. Cyclone separator according to claim 1 or 2, **characterised in that** the dirty air inlet (12) opens into the eddy area (16) centrally between the particle outlet openings (34).

4. Cyclone separator according to claims 1 to 3, **characterised in that** a submerged pipe (22) extends into the eddy area (16) at the particle outlet openings (34), which forms the clean air intake (24) and is connected to the clean air outlet.

5. Cyclone separator according to claim 5, **characterised in that** the submerged pipes (22) are connected to a common clean air outlet opening (28) of the clean air outlet.

6. Cyclone separator according to claim 4 or 5, **characterised in that** at least one filter element (42) is arranged between the submerged pipes (22) and the clean air outlet.

7. Cyclone separator according to claim 6, **characterised in that** the filter element (42) is arranged between a connecting section (40) of the submerged pipes (22) and the clean air outlet opening (28).

## Revendications

1. Séparateur cyclone (14) à utiliser dans un dispositif d'aspiration (4) d'un outil à main (2), comme en particulier d'un outil de forage ou de burinage actionné par un moteur, comprenant une entrée d'air sale (12) pour admettre de l'air rejeté, lequel est aspiré à travers une ouverture d'aspiration (8) au moyen d'un ventilateur aspirant (38) et est chargé de particules abrasées (P) produites lors du fonctionnement de l'outil à main (2), comprenant une sortie d'air pur pour évacuer de l'air épuré, et comprenant, intercalée entre les deux, une chambre de tourbillonnement (16) dans laquelle l'entrée d'air sale (12) débouche sensiblement tangentiellement pour créer un courant tourbillonnant autour d'une prise d'air pur (24) communiquant avec la sortie d'air pur et qui, à travers une sortie de particules, est ouverte sur une chambre collectrice (36), **caractérisé en ce que** la sortie de particules est pourvue d'au moins deux ouvertures de sortie de particules (34) entre lesquelles l'entrée d'air sale (12) débouche dans la chambre de tourbillonnement (16).

2. Séparateur cyclone selon la revendication 1, **caractérisé en ce que** la chambre de tourbillonnement (16) est cylindrique et comporte une des ouvertures de sortie de particules (34) sur chacune de ses deux faces frontales (20).

3. Séparateur cyclone selon la revendication 1 ou 2, **caractérisé en ce que** l'entrée d'air sale (12) débouche dans la chambre de tourbillonnement (16) au milieu des ouvertures de sortie de particules (34).

4. Séparateur cyclone selon une des revendications 1 à 3, **caractérisé en ce qu'**un tube plongeur (22) qui forme la prise d'air pur (24) et est relié à la sortie d'air pur pénètre dans la chambre de tourbillonnement (16) au niveau de chacune des ouvertures de sortie de particules (34).

5. Séparateur cyclone selon la revendication 5, **caractérisé en ce que** les tubes plongeurs (22) sont reliés à une ouverture commune de sortie d'air pur (28) de la sortie d'air pur.

6. Séparateur cyclone selon la revendication 4 ou 5, **caractérisé en ce qu'**au moins un élément filtrant (42) est disposé entre les tubes plongeurs (22) et la sortie d'air pur.

7. Séparateur cyclone selon la revendication 6, **caractérisé en ce que** l'élément filtrant (42) est disposé entre une portion de jonction (40) des tubes plongeurs (22) et l'ouverture de sortie d'air pur (28).
